# FASCICULE DE BREVET EUROPEEN

(11) **EP 1 102 938 B1**
(45) Date de publication et mention de la délivrance du brevet: **12.04.2006**
(21) Numéro de dépôt: 00938880.2
(22) Date de dépôt: 31.05.2000
(51) Int. Cl.: F16D 25/08, F16D 25/12

(54) **PISTON ET DISPOSITIF DE COMMANDE HYDRAULIQUE D'UN EMBRAYAGE DE VEHICULE AUTOMOBILE COMPORTANT UN TEL PISTON**
KOLBEN UND VORRICHTUNG ZUR HYDRAULISCHEN STEUERUNG EINER KRAFTFAHRZEUGKUPPLUNG MITELS EINES DERARTIGEN KOLBENS
PISTON AND HYDRAULIC CONTROL DEVICE FOR THE CLUTCH OF AN AUTOMOBILE PROVIDED WITH ONE SUCH PISTON

(30) Priorité: 04.06.1999 FR 9907111
(43) Date de publication de la demande: 30.05.2001
(73) Titulaire: VALEO EMBRAYAGES s.a.s., 80009 Amiens Cedex 1 (FR)
(72) Inventeur: ANGIONE, Pasquale, F-75019 Paris (FR)
(74) Mandataire: Lemaire, Marc
(86) Numéro de dépôt international: PCT/FR2000/001519
(87) Numéro de publication internationale: WO 2000/075525

(56) Documents cités:
- EP-A- 0 345 451
- EP-A- 0 778 426
- DE-A- 3 713 248

## Description

L'invention concerne un piston pour un dispositif de commande hydraulique d'un embrayage, notamment pour véhicule automobile, comportant au moins un cylindre émetteur ou récepteur.

L'invention concerne plus particulièrement un dispositif de commande hydraulique d'un embrayage de véhicule automobile comprenant au moins un cylindre comportant un corps de cylindre présentant à l'avant un fond et ouvert à l'arrière, un piston monté coulissant axialement dans un alésage interne du corps de cylindre, au moins un joint dynamique d'étanchéité porté par le corps du cylindre pour coopérer avec la périphérie externe de piston, une tige de piston présentant à l'avant une tête pour coopérer avec le piston, du type dans lequel le corps de cylindre est en matière plastique, et du type dans lequel le piston délimite axialement vers l'avant une chambre hydraulique et est relié à son extrémité arrière avec la tige de piston.

Un tel dispositif est décrit, par exemple dans le document DE-U-295.16.488 ou dans la demande de brevet français n°98.07213 du 9 juin 1998.

Selon une conception connue par exemple de la demande de brevet français FR 9902426, le piston du dispositif de commande hydraulique est du type comportant une chemise tubulaire métallique, notamment à base d'aluminium, tôle ou acier, qui est ouverte axialement de part en part et à l'intérieur de laquelle est monté, de la manière la plus étanche possible, un corps de piston, notamment en matière plastique de manière que l'ensemble comprenant la chemise tubulaire métallique et le corps de piston constitue un équipage mobile axialement dans les deux sens dans l'alésage du corps de cylindre.

L'invention vise à proposer une conception perfectionnée d'un tel piston qui permet notamment de réaliser de manière à la plus économique possible tout en améliorant l'étanchéité axiale de la chambre hydraulique qui est délimité axialement vers l'arrière par le piston.

Dans ce but, l'invention propose un piston du type mentionné précédemment, caractérisé en ce que la chemise tubulaire comporte une cloison transversale interne qui s'étend dans un plan radial et qui est réalisée venue de matière en une seule pièce avec le corps tubulaire de la chemise pour délimiter axialement vers l'avant une chambre hydraulique dans un corps de cylindre dans lequel le piston est monté coulissant axialement.

Selon d'autres caractéristiques du piston :
- la chemise est obtenue par filage au choc ;
- la cloison délimite axialement vers l'avant une cavité arrière de la chemise, ouverte axialement vers l'arrière, qui reçoit un corps de piston rapporté ;
- le corps de piston est une pièce réalisée par moulage, notamment en matériau plastique ;
- le corps de piston est une pièce de forme générale cylindrique complémentaire de celle de la cavité arrière de la chemise dans laquelle elle est introduite axialement d'arrière en avant et dans laquelle elle est immobilisée axialement en butée contre la face arrière en vis-à-vis de la cloison intermédiaire ;
- le corps de piston est immobilisé axialement par un-anneau de retenue monté dans la cavité arrière ;
- l'extrémité libre arrière du corps de piston comporte des moyens pour raccorder le piston à l'extrémité avant d'une tige de piston ;
- l'extrémité libre arrière du corps de piston est conformée en une sphère concave ou convexe d'accrochage et d'articulation pour l'extrémité avant de la tige de piston ;
- l'épaisseur axiale de la cloison est sensiblement égale à l'épaisseur radiale de la chemise ;
- l'épaisseur axiale de la cloison est nettement supérieure à l'épaisseur radiale de la chemise et la cloison est agencée à l'extrémité avant de la chemise ;
- des passages axiaux sont formés dans la surface périphérique de la chemise au droit de la cloison épaisse ;
- la cloison délimite axialement vers l'arrière une cavité avant de la chemise, ouverte axialement vers l'avant ;
- la cavité avant reçoit un insert axial dont une face transversale d'extrémité avant constitue une surface d'appui pour l'extrémité axiale arrière d'un ressort de piston ;
- la cavité avant reçoit directement en appui axial l'extrémité axiale arrière d'un ressort de piston ;
- la cloison est agencée à l'extrémité longitudinale arrière de la chemise, et elle comporte, sur sa face arrière, des moyens, réalisés venus de matière avec la cloison et la chemise, pour raccorder le piston à l'extrémité avant d'une tige de piston ;
- lesdits moyens comportent une sphère d'accrochage et d'articulation pour l'extrémité avant de la tige de piston ;

L'invention propose aussi le dispositif de commande hydraulique d'un embrayage, notamment de véhicule automobile, caractérisé en ce qu'il comporte un piston réalisé conformément aux enseignements de l'invention.

D'autres caractéristiques et avantages de l'invention apparaîtront à la lecture de la description détaillée qui suit pour la compréhension de laquelle on se reportera aux dessins annexés dans lesquels :
- la figure 1 est une vue en section axiale longitudinale d'un cylindre émetteur d'embrayage comportant un piston selon un premier mode de réalisation de l'invention et sur laquelle le piston est représenté dans une position reculée ;
- la figure 2 est une vue en perspective éclatée des composants du piston de la figure 1 en association avec l'extrémité libre avant de la tige de piston ;
- la figure 3 est une vue similaire à celle de la figure 2 qui illustre un deuxième mode de réalisation d'un piston conforme aux enseignements de l'invention ;
- la figure 4 une variante de réalisation de la sphère d'accrochage de la tige de piston formée avec la cloison transversale arrière de la chemise du piston de la figure 3 ; et
- la figure 5 est une vue similaire à celles des figure 2 et 3 qui illustre un troisième mode de réalisation d'un piston conforme aux enseignements de l'invention.

Dans la description qui va suivre, les éléments identiques, similaires ou analogues seront désignés par les mêmes signes de référence.

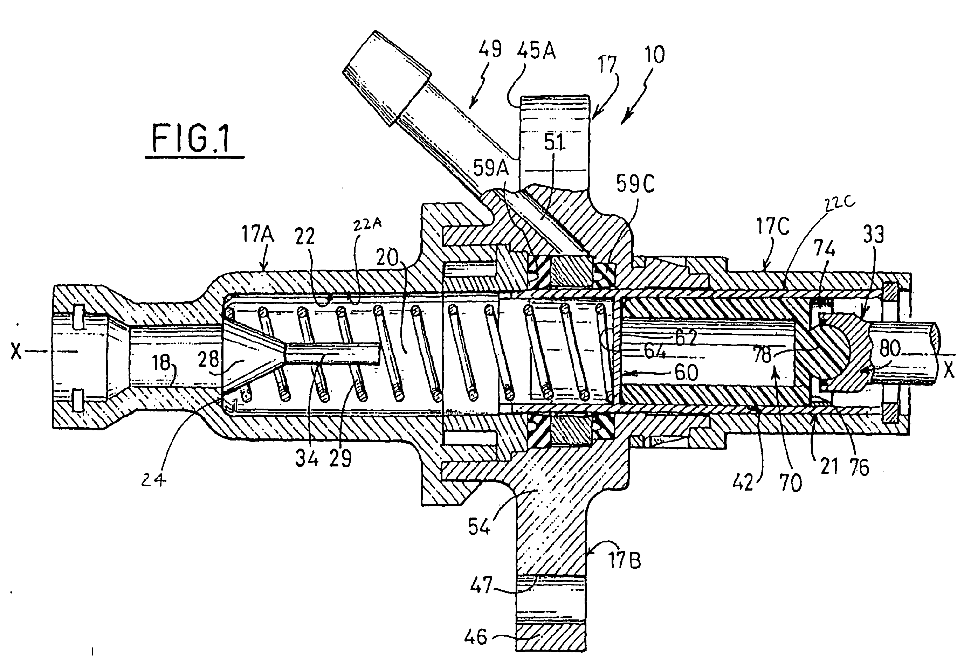

On a représenté à la figure 1 un cylindre de commande sous la forme d'un émetteur d'un dispositif de commande d'un embrayage de véhicule automobile.

Un tel dispositif (non représenté) comporte un cylindre émetteur relié par une conduite à un cylindre récepteur de structure similaire au cylindre émetteur.

Chaque cylindre récepteur ou émetteur comporte un piston mobile axialement à l'intérieur d'un corps de cylindre pour délimiter une chambre hydraulique de volume variable. Un orifice de raccordement, sur lequel se branche la conduite, débouche dans la chambre hydraulique.

Le cylindre émetteur comporte une tige de piston reliée par exemple à une pédale d'embrayage sur laquelle agit le conducteur ou un actionneur dont la mise en route est réalisée selon des programmes prédéterminés.

Le piston du cylindre émetteur est destiné à expulser un fluide, tel que de l'huile, contenu dans la chambre hydraulique en direction de la canalisation ou conduite qui relie le cylindre émetteur au cylindre récepteur.

Lorsque l'embrayage est engagé, le volume de la chambre hydraulique du cylindre émetteur est maximum tandis que le volume de la chambre de commande du cylindre récepteur est minimum.

Lors de l'opération de débrayage, le volume de la chambre hydraulique du cylindre émetteur diminue, tandis que le volume de la chambre de commande du cylindre récepteur augmente.

Le piston du cylindre récepteur agit alors sur une tige agissant, par exemple, sur la fourchette de débrayage actionnant la butée de débrayage, que comporte l'embrayage à friction.

Le piston du cylindre récepteur agit alors sur une tige agissant directement sur la butée dans le cas ou ladite butée est du type butée hydraulique.

Chaque cylindre émetteur et récepteur comporte un ressort agissant entre le piston et le fond du corps du cylindre.

Ce ressort peut être supprimé dans la commande hydraulique lorsque la pédale comporte déjà elle même un tel dispositif à ressort.

Lorsque le conducteur relâche son action sur la pédale de débrayage ou lorsque l'actionneur revient à sa position initiale d'embrayage, le ressort de rappel du cylindre émetteur se détend pour ramener le piston à sa position initiale tandis que le ressort de rappel du cylindre émetteur est comprimé par le ressort d'embrayage, tel qu'un diaphragme, qui ramène ainsi le piston du cylindre récepteur à sa position initiale.

Sur les figures, le cylindre émetteur 10 est représenté en position de livraison et il comporte un corps de cylindre 17 doté d'un orifice d'entrée 18, susceptible d'être obturé par un bouchon non représenté. C'est par l'intermédiaire de cet orifice d'entrée que la conduite ou canalisation (non représentée), reliant le cylindre récepteur (non représenté) au cylindre émetteur 10, débouche dans la chambre hydraulique 20 du cylindre émetteur.

La chambre 20 est à volume variable et elle est délimitée par le corps 17 et axialement vers l'arrière par le piston 21 monté mobile axialement à l'intérieur du corps du cylindre 17.

Le corps de cylindre 17 a une forme générale tubulaire et, il est ici constitué de trois pièces distinctes réalisées séparément par moulage en matériaux plastiques qui sont disposées axialement d'avant en arrière, c'est-à-dire de la gauche vers la droite en considérant les figures, et parmi lesquelles on distingue une pièce avant 17A comportant l'orifice 18 son extrémité axiale avant, une pièce centrale ou intermédiaire 17B et une pièce arrière 17C.

Ce corps de cylindre 17 en trois pièces 17A, 17B et 17C comporte un alésage interne 22 de forme générale borgne et d'axe X-X, correspondant à l'axe de symétrie générale du corps de cylindre 17, avec à l'avant un fond 24 d'orientation transversale, dans lequel débouche l'orifice d'entrée 18 appartenant à un raccord 25 permettant de brancher la conduite mentionnée précédemment, par exemple par brochage, le raccord 25 présentant à cet effet intérieurement des passages 26 pour le passage d'une épingle permettant de raccorder la conduite au cylindre émetteur. En variante, le raccord peut être du type à vis.

Le corps de cylindre 17 est globalement ouvert à l'arrière, c'est-à-dire que sa pièce arrière 17C est elle-même ouverte vers l'arrière.

Chacune des deux pièces d'extrémité axiale, c'est-à-dire la pièce avant 17A et la pièce arrière 17C, se présente sous la forme générale d'une pièce tubulaire de conception globalement simple et facile à réaliser par moulage en matériau plastique.

L'alésage interne 22 comporte une portion avant 22A de diamètre constant formée dans la pièce avant 17A, une portion centrale étagée formée dans la pièce centrale 17B et une portion arrière 22C de diamètre constant formée dans la pièce arrière 17C.

Le piston 21 est susceptible de coulisser dans le corps de cylindre 17, plus précisément dans l'alésage interne 22 de celui-ci, d'arrière en avant en partant de la position reculée de débrayage représentée à la figure 1 vers une position avancée d'embrayage (non représentée).

Une saillie 28, de forme générale tronconique, est réalisée venue de moulage avec le fond transversal 24 et elle s'étend axialement vers l'arrière dans l'alésage 22 pour constituer un centreur pour un ressort 29 de rappel qui est ici un ressort hélicoïdal intervenant entre le corps de cylindre 17 et le piston 21, plus précisément entre le fond transversal 24 et le piston 21.

La saillie 28 se prolonge axialement vers l'arrière par une cheminée cylindrique centrale 34 de butée.

Bien entendu, l'orifice 18 traverse le fond 24 et débouche latéralement par rapport à la saillie 28 venue de matière par moulage avec le fond 24.

Le ressort 29 intervient donc axialement entre le fond 24 et la face transversale avant du piston 21.

Le corps de cylindre est destiné à être fixé sur une partie fixe du véhicule et appartient donc à la partie globalement fixe du cylindre émetteur 10, tandis que le piston 21 avec sa tige de piston 33 appartient à la partie mobile du cylindre émetteur.

A cet effet, la partie centrale 17B du corps de cylindre 17 est réalisée sous la forme d'une plaque intermédiaire disposée axialement entre les parties avant 17A et arrière 17C du corps 17.

La plaque 17B s'étend transversalement dans un plan d'orientation radiale perpendiculaire à l'axe X-X.

La pièce centrale 17B formant plaque de fixation est réalisée par moulage en matériau plastique et elle peut comporter par exemple des oreilles 46 de fixation comportant des trous 47 pour le passage d'organes de fixation, usuellement de vis, du corps de cylindre 17, et donc du cylindre émetteur 10, sur une partie fixe du véhicule automobile.

On a aussi représenté à la figure 1 un tube 49 solidaire de la pièce centrale 17B du corps de cylindre 17.

Le tube 49 permet de raccorder l'intérieur du corps de cylindre 17 à un réservoir principal de réalimentation (non représenté) qui est monté à l'extérieur du cylindre émetteur 10, les chambres hydrauliques des cylindres émetteur et récepteur étant remplies d'un fluide hydraulique tel que par exemple de l'huile.

Le réservoir est partiellement rempli par le fluide hydraulique et il est raccordé par une conduite, non représentée sur les figures, au tube 49, ce dernier débouchant dans un canal 51, d'orientation inclinée par rapport à l'axe X-X, qui traverse la pièce centrale 17B depuis sa face transversale avant 45A pour déboucher vers l'arrière et axialement vers l'intérieur dans l'alésage central étagé 22B formé dans la partie centrale massive et de forme générale cylindrique annulaire 54 de la pièce centrale 17B.

L'étanchéité de la chambre hydraulique 20 par rapport à l'extérieur est ici assurée par deux joints dynamiques d'étanchéité avant 59A et arrière 59C qui sont portés par la pièce centrale 17B du corps de cylindre 17 et qui coopèrent chacun avec la périphérie externe de la chemise de piston 42, c'est-à-dire avec la surface cylindrique externe de cette chemise de piston 42.

Chaque joint dynamique d'étanchéité avant 59A et arrière 59C est ici une coupelle d'étanchéité à lèvre qui est montée dans un logement complémentaire formé dans la partie centrale massive 54 de la pièce centrale 17B et qui est ouvert radialement vers l'intérieur de manière que chaque joint dynamique 59A, 59C puisse coopérer par sa lèvre radialement intérieure avec la surface cylindrique externe de la chemise de piston 42. A titre de variante, chaque joint dynamique peut être un joint composite d'étanchéité.

La pièce centrale 17B fait ainsi fonction, par sa partie centrale massive 54, de boîte à joints qui porte ici deux joints dynamiques d'étanchéité, un seul joint dynamique d'étanchéité pouvant être prévu sans sortir du cadre de l'invention.

Conformément aux enseignements de l'invention, le piston 21 est constitué pour l'essentiel par la chemise tubulaire en aluminium 42 qui comporte une cloison transversale 60, qui s'étend dans un plan radial perpendiculaire à l'axe X-X et qui comporte deux faces transversales arrière 62 et avant 64.

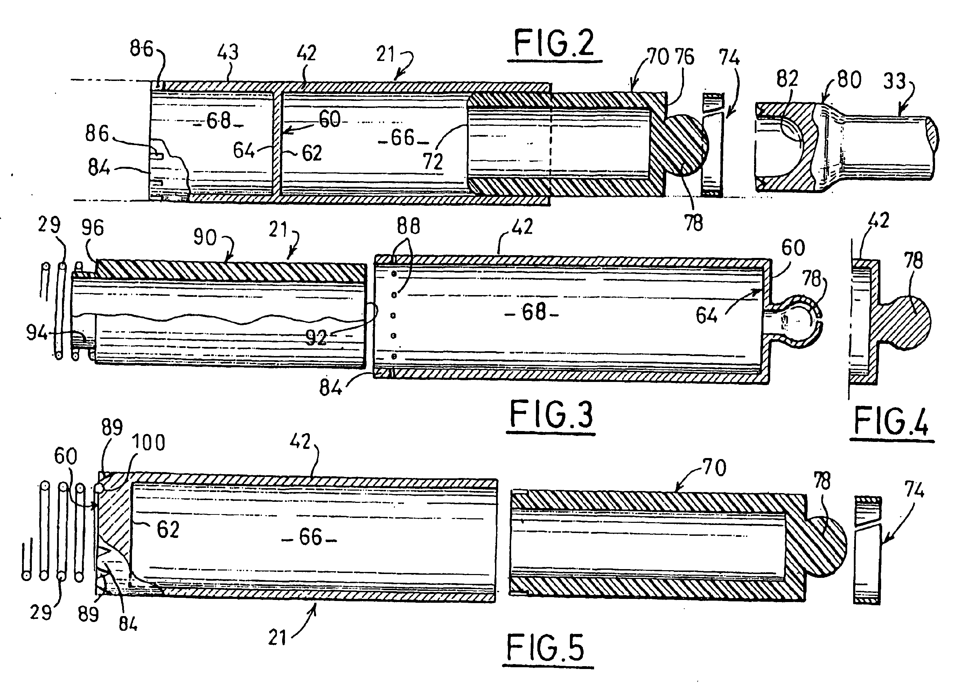

Dans le mode de réalisation illustré aux figures 1 et 2, la cloison 60 est une cloison intermédiaire, c'est-à-dire qu'elle est agencée axialement dans de la chemise tubulaire 42 à l'intérieur de laquelle elle délimite axialement vers l'avant une cavité arrière 66, qui est ouverte axialement vers l'arrière, et axialement vers l'arrière une cavité avant 68 qui est ouverte axialement vers l'avant.

Ainsi, la cavité 68, et donc le piston 21, est borgne et le piston 21, avec sa chemise cloisonnée 42, délimite de manière étanche, axialement vers l'arrière, la chambre hydraulique 20 sans faire appel à des moyens complémentaires d'étanchéité agencés à l'intérieur du piston 21.

A cet effet, conformément aux enseignements de l'invention, la cloison transversale 60 est réalisée venue de matière en une seule pièce avec le corps tubulaire de la chemise 42.

Afin de réaliser une pièce 42, 60 de faible épaisseur en aluminium et à coût de fabrication réduit, la chemise cloisonnée 42, 60 est de préférence réalisée selon la technique du filage au choc.

Cette technique connue permet de réalisée en grande série, a cadence élevée et à faible coût, une pièce tubulaire cloisonnée telle que la chemise 42, 60 qui possède de plus une bonne précision dimensionnelle et un état de surface satisfaisant pour sa surface cylindrique extérieure convexe 43, le long de laquelle coulisse de manière étanche les lèvres des joints dynamiques d'étanchéité.

Outre la chemise cloisonnée 42, le piston 21 comporte un corps de piston 70 qui est réalisé sous la forme d'une pièce cylindrique tubulaire creuse moulée en matière plastique.

Le corps de piston 70 est ouvert axialement vers l'avant et il est délimité par un bord annulaire d'extrémité axiale avant 72 qui, en position montée du corps de piston 70 dans la chemise cloisonnée 42 et comme on peut le voir à la figure 1, est en appui axial contre la face transversale arrière 62 de la cloison 60.

Pour immobiliser axialement le corps de piston 70 à l'intérieur de la cavité arrière 66 de la chemise cloisonnée 42 qui le reçoit, il est par exemple prévu un anneau élastique 74 qui est monté serré radialement à l'intérieur de la cavité 66 et qui est en appui axial vers l'avant contre la face transversale annulaire d'extrémité arrière 76 du corps de piston 70.

Le corps de piston 70 est une pièce très simple et peu coûteuse à fabriquer dans la mesure où il n'est pas nécessaire d'assurer une quelconque étanchéité axiale ou radiale entre le corps de piston 70 et la chemise tubulaire 42.

Selon l'exemple réalisation représenté aux figures 1 et 2, l'extrémité libre arrière du corps de piston 70 peut comporter une sphère 78 qui est par exemple réalisée venue de matière par moulage avec le corps de piston 70 et qui constitue, de manière connue, une sphère d'accrochage et d'articulation pour la tête d'extrémité avant 80 de la tige de piston 33 qui comporte un logement hémisphérique 82 complémentaire de la sphère 78, la liaison entre la tête 80 et la sphère d'accrochage 78 étant par exemple assurée par sertissage ou par emboîtement élastique.

Afin de permettre une réalimentation de la chambre hydraulique 20, en fonction de la position axial du piston 21 par rapport au joint d'étanchéité avant 59A, la portion d'extrémité longitudinale avant 84 comporte ici une série de fentes axiales débouchantes 86 constituant autant de passages susceptibles de mettre la chambre hydraulique 20 en communication avec le canal 51.

Dans mode de réalisation illustré à la figure 3, la cloison transversale 60 est une cloison d'extrémité axiale arrière qui délimite, par sa face transversale avant 64, une seule cavité avant 68 à l'intérieur de la chemise tubulaire cloisonnée 42.

Afin de permettre au ressort 29, sans modifier la longueur et les caractéristiques élastiques de ce dernier, de prendre appui axialement contre le piston, la cavité avant 68 de la chemise cloisonnée 42 reçoit un insert 90 qui est une pièce de forme générale tubulaire réalisée par moulage en matière plastique et qui, en position montée, est en appui axialement vers l'arrière par sa face transversale annulaire d'extrémité arrière 92 contre la portion en vis-à-vis de la face transversale avant 64 de la cloison 60.

La partie d'extrémité libre avant 94 de l'insert 90 est amincie radialement pour constituer une virole de centrage et de guidage de l'extrémité longitudinale arrière de ressorts de rappel 29 qui prend par ailleurs appui axialement contre l'épaulement radial avant 96 qui délimite la portion amincie 94.

Lorsque la conception générale du dispositif le permet, c'est-à-dire lorsque l'on peut dimensionner et le ressort de rappel 29 de manière adéquate, on peut réaliser un dispositif de commande sans ressort de rappel et il est alors possible de supprimer l'insert 90.

Il est à noter que, comme dans le cas du corps de piston en matière plastique 70 évoqué précédemment, l'insert 90 ne nécessite aucune précision dimensionnelle particulière pour sa fabrication.

Pour assurer la réalimentation de la chambre hydraulique 20, la partie d'extrémité libre avant 84 du corps tubulaire de la chemise cloisonnée 42 comporte ici une série de trous radiaux débouchants 88.

Pour permettre l'accrochage et l'articulation de la tête 80 de la tige 33, la cloison transversale arrière 60 de la chemise cloisonnée 42 comporte une sphère d'accrochage et d'articulation 78 qui est réalisée venue de matière avec la chemise cloisonnée 42.

Dans le mode de réalisation représenté à la figure 3, la sphère 78 est réalisée par fluo-roulage, tandis que dans le cas de la variante représentée à la figure 4, la sphère d'accrochage 78 est une sphère massive réalisée par usinage.

On décrira maintenant le troisième mode de réalisation illustré à la figure 5 dans lequel la cloison transversale 60 est une cloison d'extrémité avant de la chemise tubulaire 42 qui délimite, par sa face transversale arrière 62, seulement une cavité arrière 66 qui reçoit un corps de piston 70 de conception similaire à celle du corps de piston décrit en référence aux figures 1 et 2.

La cloison transversale avant 60 est une cloison épaisse, c'est-à-dire que son épaisseur axiale est nettement supérieure à l'épaisseur radiale du corps tubulaire de la chemise 42.

Cette conception permet de réaliser les passages de communication pour la réalimentation de la chambre hydraulique 20 sous la forme de rainures 89 formées radialement dans l'épaisseur de la partie d'extrémité libre avant 84 de la chemise tubulaire 42 au droit de laquelle s'étend la cloison transversale épaisse 60.

Chaque rainure 89 présente une forme à en V qui débouche axialement vers l'avant et qui est aussi en en V dans l'épaisseur du matériau, de manière à présenter une section de passage qui se réduit progressivement axialement d'avant vers l'arrière.

Les rainures 89 sont avantageusement obtenues directement lors du formage par filage au choc du corps de piston grâce à une empreinte complémentaire prévue dans la matrice. -

Cette conception est principalement prévue pour être utilisée dans le cas d'un dispositif le de commande hydraulique sans ressort de rappel 29, mais si le dimensionnement des composants le permet et si l'on souhaite prévoir un ressort de rappel 29, il est possible de former dans la face transversale avant 64 de la cloison épaisse 60 une gorge circulaire axiale 100 qui reçoit, pour la guider et la centrer, la dernière spire du ressort hélicoïdal 29.

Dans tous les cas, la face transversale avant 64 de la cloison 60 constitue une butée avec laquelle coopère l'extrémité libre arrière de la cheminée 34 pour déterminer la position avancée du piston 21.

## Revendications

1. Piston (21) pour un dispositif de commande hydraulique (10) d'un embrayage, notamment de véhicule automobile, du type comportant un corps de piston (70) rapporté dans une chemise tubulaire métallique (42), notamment à base d'aluminium, de façon que la chemise (42) comporte une cloison transversale interne (60) qui s'étend dans un plan radial et qui est réalisée venue de matière en une seule pièce avec le corps tubulaire de la chemise (42) **caractérisé par** délimiter axialement vers l'avant une chambre hydraulique (20) dans un corps de cylindre (17) dans lequel le piston est monté coulissant axialement et en ce que la cloison (60) délimite axialement vers l'avant une cavité arrière (66) de la chemise, ouverte axialement vers l'arrière, qui reçoit le corps de piston rapporté (70).

2. Piston selon la revendication précédente, **caractérisé en ce que** la chemise (42, 60) est obtenue par filage au choc.

3. Piston selon la revendication 1 ou 2, **caractérisé en ce que** le corps de piston (70) est une pièce réalisée par moulage, notamment en matériau plastique.

4. Piston selon la revendication précédente, **caractérisé en ce que** le corps de piston (70) est une pièce de forme générale cylindrique complémentaire de celle de la cavité arrière (66) de la chemise (42), la-dite pièce étant introduite dans la chemise axialement d'arrière en avant et étant immobilisée dans la chemise axialement en butée contre la face arrière en vis-à-vis (62) de la cloison intermédiaire (60).

5. Piston selon la revendication précédente, **caractérisé en ce que** le corps de piston (70) est immobilisé axialement par un anneau de retenue (74) monté dans la cavité arrière (66).

6. Piston selon l'une quelconque des revendications 1 à 5, **caractérisé en ce que** l'extrémité libre arrière du corps de piston (70) comporte des moyens (78) pour raccorder le piston (21, 42, 70) à l'extrémité avant (80) d'une tige de piston (33).

7. Piston selon la revendication précédente, **caractérisé en ce que** l'extrémité libre arrière du corps de piston (70) est conformée en une sphère concave ou convexe (78) d'accrochage et d'articulation pour l'extrémité avant (80) de la tige de piston (33).

8. Piston selon l'une quelconque des revendications 1 à 7, **caractérisé en ce que** l'épaisseur axiale de la cloison (60) est sensiblement égale à l'épaisseur radiale de la chemise (42).

9. Piston selon l'une quelconque des revendications 1 à 7, **caractérisé en ce que** l'épaisseur axiale de la cloison (60) est nettement supérieure à l'épaisseur radiale de la chemise (42) et **en ce que** la cloison est agencée à l'extrémité avant de la chemise (42).

10. Piston selon la revendication précédente, **caractérisé en ce que** des passages axiaux (86, 88, 89) sont formés dans la surface périphérique de la chemise au droit de la cloison épaisse (60).

11. Piston selon l'une des revendications 1 ou 2, **caractérisé en ce que** la cloison (60) délimite axialement vers l'arrière une cavité avant (64) de la chemise, ouverte axialement vers l'avant.

12. Piston selon la revendication 11, **caractérisé en ce que** la cavité avant (64) reçoit un insert axial (90) dont une face transversale d'extrémité avant (96) constitue une surface d'appui pour l'extrémité axiale arrière d'un ressort de piston (29).

13. Piston selon la revendication précédente, **caractérisé en ce que** la cavité avant (64) peut recevoir directement en appui axial l'extrémité axiale arrière d'un ressort de piston.

14. Piston selon l'une des revendications 11 à 13, **caractérisé en ce que** la cloison (60) est agencée à l'extrémité longitudinale arrière de la chemise (42), et **en ce qu'**elle comporte, sur sa face arrière, des moyens, réalisés venus de matière avec la cloison (60) et la chemise (42), pour raccorder le piston (21, 42) à l'extrémité avant d'une tige de piston (33).

15. Piston selon la revendication précédente, **caractérisé en ce que** lesdits moyens comportent une sphère d'accrochage (78) et d'articulation pour l'extrémité avant (80) de la tige de piston (33).

16. Dispositif (10) de commande hydraulique d'un embrayage, notamment d'un embrayage de véhicule automobile, **caractérisé en ce qu'**il comporte un piston (21, 42, 60) selon l'une quelconque des revendications précédentes.

## Patentansprüche

1. Kolben (21) für eine hydraulische Betätigungsvorrichtung (10) einer Kupplung, insbesondere für Kraftfahrzeuge, umfassend einen Kolbenkörper (70), der in einer aus Metall, insbesondere auf Aluminiumbasis, ausgeführten rohrförmigen Kolbenbuchse (42) angefügt ist, wobei die Kolbenbuchse (42) eine innere Quertrennwand (60) umfasst, die sich in einer radialen Ebene erstreckt und die einstückig am rohrförmigen Körper der Kolbenbuchse (42) angeformt ist, **dadurch gekennzeichnet, dass** axial nach vorn eine Hydraulikkammer (20) in einem Zylinderkörper (17) begrenzt ist, in welchem der Kolben axial verschiebbar gelagert ist, und dass die Trennwand (60) axial nach vorn einen axial nach hinten offenen hinteren Hohlraum (66) der Kolbenbuchse begrenzt, der den angefügten Kolbenkörper (70) aufnimmt.

2. Kolben nach dem vorangehenden Anspruch, **dadurch gekennzeichnet, dass** die Kolbenbuchse (42, 60) durch Schlagstrangpressen gefertigt ist.

3. Kolben nach Anspruch 1 oder 2, **dadurch gekenn- zeichnet,** dass der Kolbenkörper (70) ein als Formteil, insbesondere aus Kunststoff, ausgeführtes Element ist.

4. Kolben nach dem vorangehenden Anspruch, **dadurch gekennzeichnet, dass** der Kolbenkörper (70) ein Teil mit allgemein zylindrischer Form passend zur Form des hinteren Hohlraums (66) der Kolbenbuchse (42) ist, wobei dieses Teil axial von hinten nach vorn in die Kolbenbuchse eingesetzt ist und in der Kolbenbuchse im Anschlag an der gegenüberliegenden rückseitigen Fläche (62) der Zwischentrennwand (60) axial gesichert ist.

5. Kolben nach dem vorangehenden Anspruch, **dadurch gekennzeichnet, dass** der Kolbenkörper (70) durch einen in den hinteren Hohlraum (66) eingesetzten Haltering (74) axial gesichert ist.

6. Kolben nach einem der Ansprüche 1 bis 5, **dadurch gekennzeichnet, dass** das hintere freie Ende des Kolbenkörpers (70) Mittel (78) umfasst, um den Kolben (21, 42, 70) an das vordere Ende (80) einer Kolbenstange (33) anzuschließen.

7. Kolben nach dem vorangehenden Anspruch, **dadurch gekennzeichnet, dass** das hintere freie Ende des Kolbenkörpers (70) als eine konkave oder konvexe Einsetz- oder Gelenkkugel (78) für das vordere Ende (80) der Kolbenstange (33) gestaltet ist.

8. Kolben nach einem der Ansprüche 1 bis 7, **dadurch ggekennzeichnet, dass** die axiale Dicke der Trennwand (60) in etwa gleich der radialen Dicke der Kolbenbuchse (42) ist.

9. Kolben nach einem der Ansprüche 1 bis 7, **dadurch gekennzeichnet, dass** die axiale Dicke der Trennwand (70) deutlich größer als die radiale Dicke der Kolbenbuchse (42) ist und dass die Trennwand am vorderen Ende der Kolbenbuchse (42) angeordnet ist.

10. Kolben nach dem vorangehenden Anspruch, **dadurch gekennzeichnet, dass** axiale Durchgänge (86, 88, 89) in der Umfangsfläche der Kolbenbuchse in Höhe der dicken Trennwand (60) ausgebildet sind.

11. Kolben nach einem der Ansprüche 1 oder 2, **dadurch ge- kennzeichnet,** dass die Trennwand (60) axial nach hinten einen axial nach vorn offenen vorderen Hohlraum (64) der Kolbenbuchse begrenzt.

12. Kolben nach Anspruch 11, **dadurch gekenn- zeichnet,** dass der vordere Hohlraum (64) einen axialen Einsatz (90) aufnimmt, dessen vordere Querabschlussfläche (96) eine Auflagefläche für das hintere axiale Ende einer Kolbenfeder (29) bildet.

13. Kolben nach dem vorangehenden Anspruch, **dadurch ge- kennzeichnet,** dass der vordere Hohlraum (64) in axialer Anlage unmittelbar das hintere axiale Ende einer Kolbenfeder aufnehmen kann.

14. Kolben nach einem der Ansprüche 11 bis 13, **dadurch gekennzeichnet, dass** die Trennwand (60) am hinteren Längsende der Kolbenbuchse (42) angeordnet ist und dass sie an ihrer rückseitigen Fläche einstückig mit der Trennwand (60) und mit der Kolbenbuchse (42) ausgeführte Mittel umfasst, um den Kolben (21, 42) an das vordere Ende einer Kolbenstange (33) anzuschließen.

15. Kolben nach dem vorangehenden Anspruch, **dadurch ge- kennzeichnet,** dass die besagten Mittel eine Einsetz- oder Gelenkkugel (78) für das vordere Ende (80) der Kolbenstange (33) umfassen.

16. Vorrichtung (10) zur hydraulischen Betätigung einer Kupplung, insbesondere für Kraftfahrzeuge, **dadurch gekenn- zeichnet,** dass sie einen Kolben (21, 42, 60) nach einem der vorangehenden Ansprüche umfasst.

## Claims

1. A piston (21) for an hydraulic control apparatus for a clutch, especially for a motor vehicle, of the type comprising a piston body (70) attached to a metallic tubular jacket (42), in particular of aluminium, such that the jacket (42) includes an internal cross wall (60) which lies in a radial plane and which is formed in one piece with the tubular body of the jacket (42), **characterised by** delimiting, axially towards the front, an hydraulic chamber (20) in a cylinder body (17) in which the piston is mounted for axial sliding movement, and in that the cross wall (60) delimits, axially at the front, a rear cavity (66) of the jacket which is open axially towards the rear and which receives the inserted piston body (70).

2. A piston according to Claim 1, **characterised in that** the jacket (42,60) is formed by impact drawing.

3. A piston according to Claim 1 or Claim 2, **characterised in that** the piston body (70) is a member made by moulding, especially in plastics material.

4. A piston according to Claim 3, **characterised in that** the piston body (70) is a member having a generally cylindrical form complementary to that of the rear cavity (66) of the jacket (42), the said member being introduced into the jacket axially forwards from the rear, and immobilised in the jacket in axial abutment against the facing rear face (62) of the intermediate cross wall (60).

5. A piston according to Claim 4, **characterised in that** the piston body (70) is immobilised by a retaining washer (74) mounted in the rear cavity (66).

6. A piston according to any one of Claims 1 to 5, **characterised in that** the free rear end of the piston body (7) includes means (78) for connecting the piston (21, 42, 70) to the front end (80) of a piston rod (33).

7. A piston according to Claim 6, **characterised in that** the rear end of the piston body (70) is configured as a concave or convex sphere (78) for mounting and articulation on the front end (80) of the piston rod (33).

8. A piston according to any one of Claims 1 to 7, **characterised in that** the radial thickness of the cross wall (60) is substantially equal to the radial thickness of the jacket (42).

9. A piston according to any one of Claims 1 to 7, **characterised in that** the axial thickness of the cross wall (60) is substantially greater than the radial thickness of the jacket (42), and **in that** the cross wall is arranged at the front end of the jacket (42).

10. A piston according to Claim 9, **characterised in that** the axial passages (86, 88, 89) are formed in the peripheral surface of the jacket in line with the thick cross wall (60).

11. A piston according to Claim 1 or Claim 2, **characterised in that** the cross wall (60) delimits, axially towards the rear, a front cavity (64) of the jacket which is open axially forwards.

12. A piston according to Claim 11, **characterised in that** the front cavity (64) receives an axial insert (90), of which a front transverse end face (96) constitutes an engagement surface for the rear axial end of a piston spring (29).

13. A piston according to Claim 12, **characterised in that** the front cavity (64) is able to receive the axial rear end of a piston spring in direct axial engagement.

14. A piston according to one of Claims 11 to 13, **characterised in that** the cross wall (60) is arranged at the longitudinal rear end of the jacket (42), and **in that** it includes, on its rear face, means formed integrally with the cross wall (60) and jacket (42), for attaching the piston (21, 42) to the front end of a piston rod (33).

15. A piston according to Claim 14, **characterised in that** the said means comprise a spherical element (78) for mounting and articulation on the front end (80) of the piston rod (33).

16. Hydraulic control apparatus (10) for a clutch, especially a motor vehicle clutch, **characterised in that** it includes a piston (21, 42, 60) according to any one of the preceding Claims.
